Europäisches Patentamt

European Patent Office

Office européen des brevets

(11) Publication number: 0 240 602
A2

## (12) EUROPEAN PATENT APPLICATION

(21) Application number: 86116523.1

(22) Date of filing: 27.11.86

(51) Int. Cl.4: G21C 19/20 , G21C 19/32 , G21C 13/06

(30) Priority: 03.04.86 US 848002

(43) Date of publication of application:
14.10.87 Bulletin 87/42

(84) Designated Contracting States:
DE FR GB

(71) Applicant: Rockwell International Corporation
2230 East Imperial Highway
El Segundo, California 90245(US)

(72) Inventor: Brunings, Jay E.
10140-7 Larwin Avenue
Chatsworth California 91311(US)
Inventor: Jones, Charles E., Jr.
18410 Hiawatha
Northridge California 91320(US)

(74) Representative: Wächtershäuser, Günter, Dr.
Tal 29
D-8000 München 2(DE)

(54) Fuel transfer means.

(57) An improvement and a core assembly transfer means for a nuclear reactor system including a sealed containment vessel a substantially cylindrical core barrel containing an array of core assemblies arranged about a first vertical centerline and a pool of liquid metal coolant within said containment means. The transfer means comprises a first rotatable plug located on the top of the containment vessel and located concentrically about the centerline and a second rotatable plug means located in the first rotatable plug means and located concentrically about a second vertical centerline which is offset from the first vertical centerline. The transfer means further includes a vertical transfer machine located on the second rotatable plug and offset from the second vertical centerline a distance substantially equal to that between the first and second centerlines and including an elongated vertically movable rod member extending into the containment vessel for vertical movement of selected core assemblies. There also is provided an offset arm transfer machine located on an upper surface of the first rotatable plug means and displaced radially from the first vertical centerline. The offset arm transfer machine also includes an elongated vertically and rotatably movable rod member extending into the containment vessel provided at its lower end with a horizontally extending arm member to provide both vertical and horizontal movement of selected core assemblies. The rotatable plugs and transfer machine interact to provide for the transfer of core assemblies from a temporary storage location within the containment vessel and any selected position within the core barrel.

### FUEL TRANSFER MEANS

Statement of Government Interest

The Government has rights in this invention pursuant to Contract (or Grant) No. DE-AC06-79ET37109 awarded by the U.S. Department of Energy.

Background of the Invention

1. Field of the Invention

The present invention is broadly directed to the transfer of core assemblies from the core of a nuclear reactor to an intermediate storage location. In a more particular aspect it is directed to the transfer of core assemblies from the core of the liquid metal-cooled reactor in which access to various locations within the reactor containment vessel are provided by a plurality of rotating plugs. The present invention is applicable to both pool reactors and loop reactors. In a pool reactor the nuclear reactor core and various auxiliary equipment, such as intermediate heat exchangers, pumps and the like, are all immersed in a pool of liquid coolant and contained within a sealed vessel. In a loop reactor only the reactor core and portions of the core assembly transfer mechanism are located within the vessel and the pumps and heat exchanger are located externally of the vessel.

2. Description of the Prior Art

Nuclear power facilities for the generation of electrical power include a sealed containment vessel in which is located the reactor core. The reactor core typically will comprise a substantially cylindrical core barrel in which is located an array of core assemblies. Generally the core assemblies are in turn surrounded by radiation shield assemblies. The core assemblies themselves comprise both fuel assemblies and control rods and in the case of a breeder reactor, will also include blanket material. Typically the blanket material is a fertile material such as U238 which is converted to a fissile material upon exposure to radiation by fast neutrons.

Obviously of course the facilities must also include some provision for removing and replacing the various core assemblies, either for the purpose of refueling the reactor, replacing damaged control rods or the removal of the irradiated blanket assemblies. Heretofore it has been proposed to accomplish this through the use of a plurality of rotating plugs and a separate fuel transfer duct. For example, the design for the proposed Large Scale Prototype Breeder Loop Plant includes an inclined fuel transfer duct terminating at an upper end in a fuel transfer cell and at a lower end in a fixed, predetermined location within the containment vessel. Located on top of the reactor containment vessel were three rotating plugs. A large rotating plug, an intermediate rotating plug located eccentrically within the large rotating plug and a small rotating plug located eccentrically within the intermediate rotating plug. Located on an upper surface of the small rotating plug was a fuel transfer machine which included an elongated vertically moveable rod member that extended into the reactor containment vessel. By selective movement of the three rotating plugs it was possible to position the fuel transfer machine and elongated rod member over any selected core assembly as well as the predetermined location at which the fuel transfer duct terminated. Thus this system provided means for movement of core assemblies within the containment vessel.

Each plug had to be provided with bearings about its outer periphery. In addition, some means had to be provided for driving each of the plugs independently of the other. Thus, a disadvantage of this system was its complexity. A more significant disadvantage was the size of the plugs required to provide access to all the required points within the containment vessel. Indeed in designs utilizing such a concept, the size of the plugs required influenced the size of the vessel, rather than the vessel size being determined solely by what must be contained therein. Thus, there clearly exists a need for a fuel transfer system which would minimize or eliminate these disadvantages.

Objects of the Invention

It is an object of the invention to provide a fuel transfer means which does not require three rotating plugs.

It is another object of the invention to provide a fuel transfer means which has a minimal effect on the size of a nuclear reactor containment vessel.

Another object of the invention is to provide a less expensive fuel transfer means than those proposed heretofore.

Still another object of the invention is to provide a fuel transfer means which utilizes two transfer machines and only two rotating plugs, all of which operate in cooperation with one another.

These and other objects of the invention will be more apparent in the drawings and the following detailed description.

## Summary of the Invention

Broadly, the present invention is directed to an improvement in the means for transfer of core assemblies within a sealed containment vessel of a nuclear reactor. It is particularly applicable to liquid metal-cooled nuclear reactors of the pool type wherein not only the reactor core barrel (containing core assemblies) but also some of the auxiliary equipment including, for example, heat exchangers and pumps are all immersed in a pool of the liquid metal contained within the vessel. Typically, the liquid metal utilized as a coolant is either sodium, potassium or a mixture thereof. The transfer means of the present invention also is applicable to a loop reactor system.

In all instances the reactor system includes a sealed containment vessel containing a substantially cylindrical reactor core barrel. Located within the core barrel is an array of core assemblies arranged about a first vertical center line and surrounded by an outer peripheral array of radiation shield assemblies. The core barrel is immersed in a pool of liquid metal coolant within the containment vessel. Outside of the core barrel but within the containment vessel there is provided a separate, temporary storage location for core assemblies.

The transfer means of the present invention comprises a first rotatable plug means located in the top of the containment vessel. The first rotatable plug means is formed like a disc having a substantially flat upper horizontal surface and is located concentrically about the first vertical center line through the array of core assemblies. A second rotatable plug means is provided which is located in the first rotatable plug means. The second plug means also comprises a disc having a substantially flat upper surface is located concentrically about a second vertical center line. The second vertical center line is offset from the first vertical center line.

A vertical transfer machine is located on an upper surface of the second rotatable plug means and offset from the second vertical center line a distance substantially equal to that between the first and second center lines such that by selective rotation of the first and second plug members it is possible to position the vertical transfer machine over any selected core assembly located in a central portion of the core barrel. The vertical transfer machine includes an elongated, vertically moveable rod member which extends downwardly into the containment vessel and terminates at its lower end in a grapple means for removable attachment to a selected core assembly.

An essential aspect of the present invention is a provision of an offset arm transfer machine which is located on an upper surface of the first rotatable plug means and radially displaced from said first vertical center line. The offset arm transfer machine includes an elongated, vertically and rotatably moveable, rod member extending into the containment vessel having at its lower end a horizontally extending arm member which terminates in a grapple for removable connection to a selected core assembly. The horizontally extending arm member has a length such that selective rotation of the vertical rod member and the first rotatable plug means permits the transfer of core assemblies between the separate temporary storage location, at least one core assembly location accessible by the vertical transfer machine, and all of the core assemblies located outside of the central portion of the core barrel which are not accessible by the vertical transfer machine.

In accordance with a particularly preferred aspect of the invention the offset arm transfer machine is located on said first rotatable plug means at a location opposite·the second vertical center line. In accordance with another preferred embodiment of the invention the second rotatable plug means is offset from the first vertical center line a distance sufficient such that about 30-40% of the core assemblies are accessible by the vertical transfer machine. It is a particular advantage of the present invention that it not only eliminates one rotating plug from the designs proposed heretofore, but it provides for a substantial reduction in the size of the containment vessel.

## Brief Description of the Drawings

Fig. 1 is a perspective view, partially broken away, of a liquid metal-cooled nuclear reactor of the pool-type utilizing the transfer means of the present invention

Fig. 2 is a schematic front elevation view of the reactor shown in Fig. 1 with non-material parts eliminated and Fig. 3 is a schematic plan view of Fig. 2 illustrating relative movement of the various parts of the invention.

### Detailed Description of the Invention

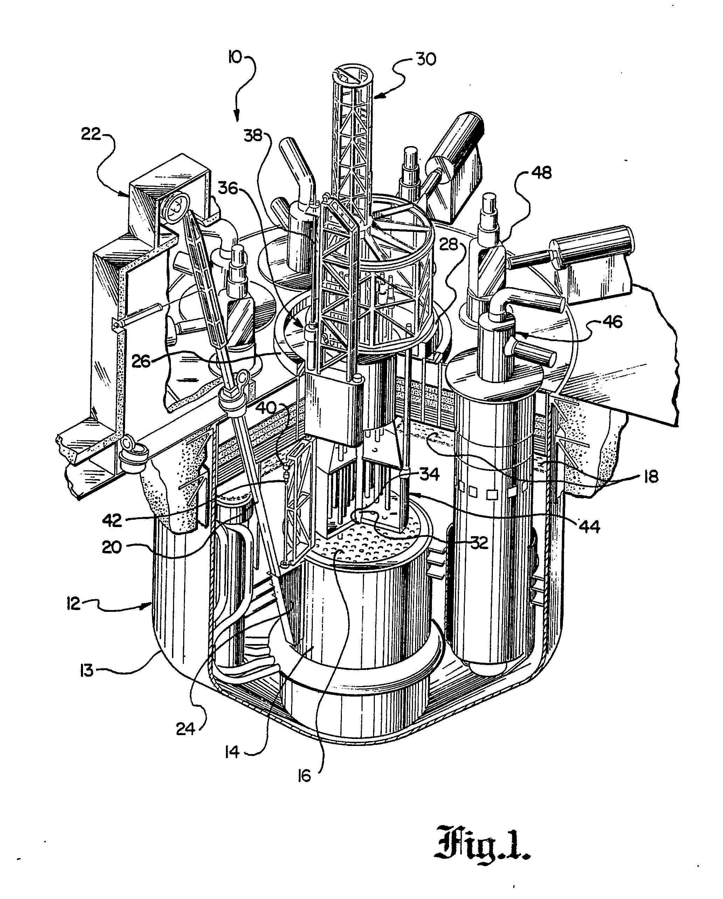

Referring now to Fig. 1 therein is depicted a portion of a liquid-metal cooled nuclear reactor facility 10 which includes a nuclear reactor assembly 12 comprising a containment vessel 13 containing a reactor are barrel 14. Typically core barrel 14 is substantially cylindrical in shape and contains an array of elongated vertically extended core assemblies 16. The core assemblies include fuel assemblies, control rods, and in the case of a breeder reactor, blanket assemblies, all of which may require periodic removal and replacement. The core barrel and core assemblies are immersed in a large body or pool of an alkali metal coolant 18. Typically, the alkali metal coolant will comprise sodium, potassium or a mixture thereof.

The core assemblies are introduced into and removed from reactor assembly 12 via a bucket riding on a track in a transfer duct 20 which extends upwardly to a fuel transfer cell 22. Transfer duct 20 terminates at its lower end in a temporary storage location 24. In the type of reactor shown, core assemblies would only be in the temporary storage location 24 for a brief period of time, however, it is within the scope of the present invention that storage location 24 could comprise racks or baskets placed about the periphery of the interior of the reactor for extended storage periods.

Located on the top of containment vessel 13 is a first rotatable plug member 26 which is substantially disc-shaped and mounted concentrically about the core barrel 14 and a first vertical center line. Located within rotatable plug 26 is a second smaller rotatable plug member 28 which is also in the form of a disc mounted and rotatable about a second vertical access which is offset from the first vertical centerline. Located on an upper surface of plug 28 is a vertical transfer machine 30 which includes an elongated, vertically moveable rod member 32 extending into vessel 13. Rod member 32 is provided with a grapple 34 at its lower end for removable connection to selected core assemblies.

Located on an upper surface of plug member 26 is an offset arm transfer machine 36 which includes an elongated, vertically and rotatably movable, rod member 38 which extends into containment vessel 13. The lower end of rod member 38 is provided with a horizontally extending arm member 40, the end of which is provided with a grapple 42 for removable connection to a selected core assembly. As depicted, horizontal arm member 40 is shown extending over temporary storage location 24.

Reactor assembly 12 further includes an internal structure 44 which contains the control rods and instrumentation required during normal operation of the reactor. It is an essential feature of the present invention that structure 44 be located substantially concentrically about elongated rod member 32 of transfer machine 30. Structure 44 is suspended from a lower surface of plug member 28 and has a diameter substantially equal to that of the array of core assemblies. In the pool-type of reactor shown, reactor containment vessel 13 will also house various auxiliary equipment such as heat exchangers 46 and pumps 48.

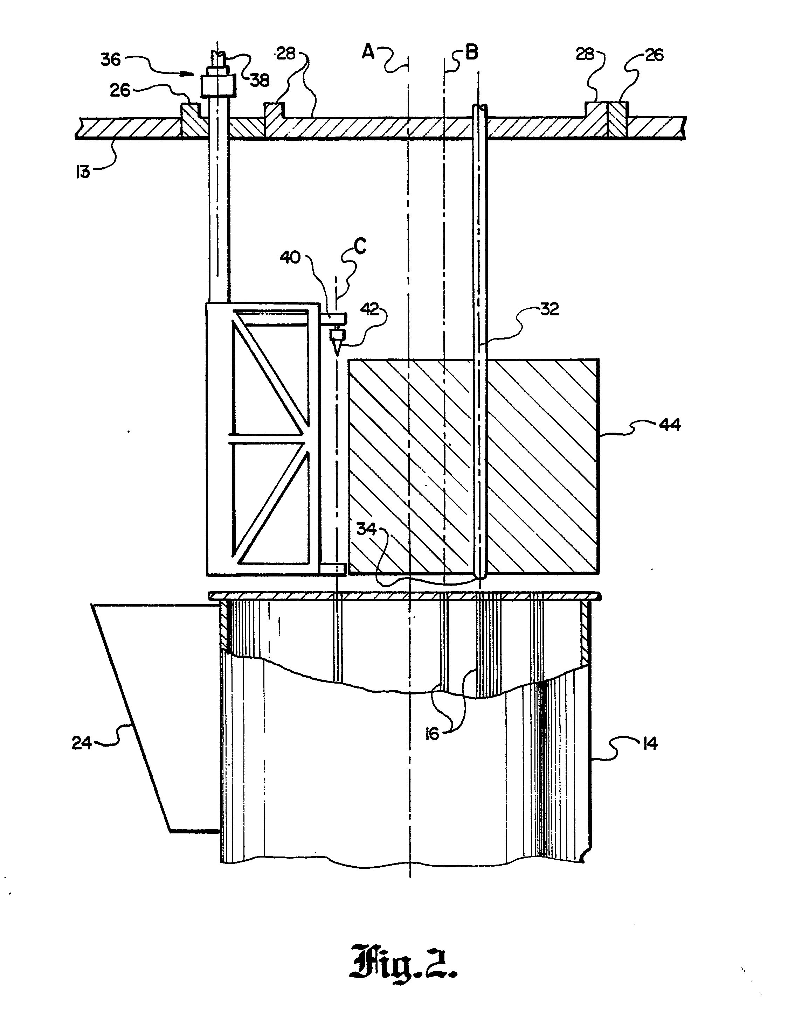

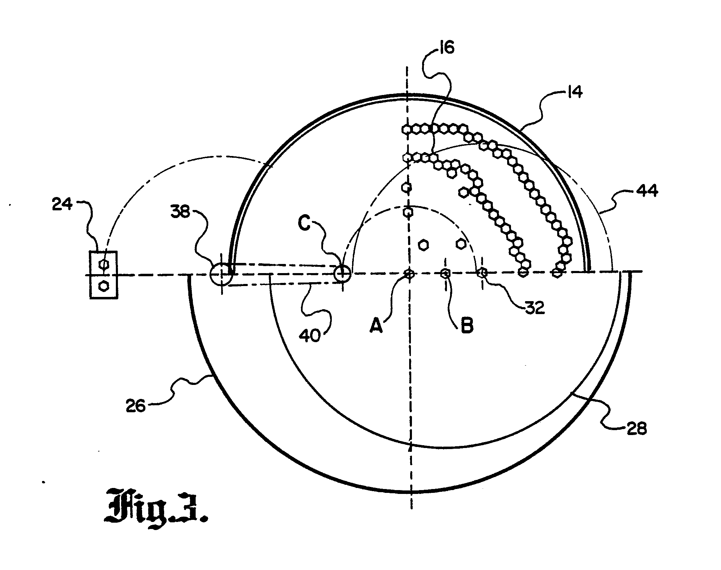

The present invention and its use will be better understood with reference to Figs. 2 and 3 which are schematics from which those portions of the reactor not material to an understanding of the present invention have been deleted in the interest of clarity. For convenience, Figs. 2 and 3 depict rotatable plug 28 positioned such that vertical transfer machine 30 and elongated rod member 32 are in the farthest most position from the first vertical center line (designated A) of core barrel 14 and rotating plug member 26.

Referring to Fig. 3 in particular it will be seen that rotation of the small rotatable plug member 28 will move the vertical transfer machine 30 (not shown) and elongated rod member 32 from the position shown to a point in which elongated rod member 32 is coincident with vertical axis A since elongated rod member 32 is located a distance from the second vertical center line designated B equal to that between vertical center lines A and B. Thus, the selective rotation of plug member 28 permits the positioning of elongated rod member 32 over any core assemblies located within the circular area designated C. In the position shown it will be apparent that horizontal arm member 40 is rotable between a position overlapping the outer periphery of area C and movable 180° to temporary storage location 24. Further, it will be apparent that selective rotation of arm member 40 and rotatable plug member 26 provide access to any core assembly located outside the area of the central portion of the core assembly designated C.

As an example of the manner in which a core assembly is loaded into core barrel 14, plug members 26 and 28 are initially positioned as depicted in Fig. 3. Horizontal arm assembly 40 is rotated 180° from the position shown such that it is over temporary storage location 24 and lowered to grasp the core assembly with the grapple. Core assembly is lifted out of temporary location 24 and by rotating arm 40 and plug member 26 may be positioned at any point within the core including a common core assembly location point located on the outer periphery of the area designated C. When the core assembly is destined for a location within the area designated C, horizontal arm 40 is moved out of the way and thereafter selective rotation of plug members 26 and 28 permit the core assembly to be picked up from the common core assembly locations by vertical transfer machine 30 and placed in the desired location within area C. Obviously, transfer of core assemblies from core barrel 14 to transfer position 24 is accomplished in reverse manner. Advantageously, there will be provided some means, such as electrical or mechanical interlocks to prevent horizontal arm 40 from striking internal structure assembly 44 when it is centered over the array of core assemblies, however such matters are well within the skill of those versed in the art.

In contrast to a reactor which would require an approximately 35 ft. diameter plug utilizing the triple rotating plug concept, in accordance with the present invention it is possible to utilize a plug having an outer diameter of less than about 26 ft. The reduction in size and elimination of one plug provides a cost savings in bearings alone which more than offset the cost of the additional transfer machine required. The biggest cost advantage, however, results from the reduction in the size of the reactor vessel. Specifically, the present invention permits about a 9 ft. reduction in the reactor vessel diameter as compared with a triple rotating plug design and this results in an estimated cost savings of in excess of about $50 Million.

From the foregoing, the preferred construction and mode of operation of the invention have been illustrated and described in what is now considered to represent its best embodiment. It should be understood, however, that within the scope of the appended claims the invention may be practiced otherwise than as hereinbefore specifically illustrated and described.

## Claims

1. In a liquid-metal cooled nuclear reactor system wherein the system includes a sealed containment vessel, a substantially cylindrical reactor core barrel containing an array of core assemblies arranged about a first vertical center line and an outer peripheral array of radiation shield assemblies surrounding said core assemblies, said core barrel being immersed in a pool of liquid metal coolant within said containment vessel and transfer means for the selective transfer of any of said core assemblies between said core barrel and a separate temporary storage location within said vessel, the improvement in the transfer means comprising; a first rotatable plug means located in the top of said containment vessel, said first rotatable plug means comprising a disc having a substantially flat upper horizontal surface and being located concentrically about said first vertical center line; a second rotatable plug means located in said first rotatable plug means, said second rotatable plug means comprising a disc having a substantially flat upper surface and being located concentrically about a second vertical center line, said second vertical center line being offset from said first vertical center line;

a vertical transfer machine located on an upper surface of said second rotatable plug means and offset from said second vertical center line a distance substantially equal to that between said first and second center lines such that selective rotation of said first and second plug members permits positioning of said vertical transfer machine over any selected core assembly located in a central portion of said core barrel, said vertical transfer machine including an elongated, vertically moveable rod member extending downwardly into said containment vessel and terminating at its lower end in a grapple means for removable attachment to a selected core assembly; and

an offset arm transfer machine located on an upper surface of said first rotatable plug means and displaced radially from said first vertical center line, said offset arm transfer machine including an elongated, vertically and rotatably moveable, rod member extending into said containment vessel having at its lower end a horizontally extending arm member terminating in a grapple for removable connection to a selected core assembly, said horizontally extending arm member having a length such that selective rotation of said vertical rod member and said first rotatable plug means permits the transfer of core assemblies between said separate temporary storage location, at least one core assembly location accessible by said vertical transfer machine, and all of the core assemblies located outside of said central portion of said core barrel.

2. The reactor system of Claim 1 wherein said first vertical transfer machine is located on the upper surface of the second rotatable plug means at a position opposite to said second vertical centerline.

3. The reactor system of Claim 1 further including an internal structure for housing control rods and instrumentation, said structure having a diameter substantially equal to that of said array of core assemblies, being located concentrically about the elongated rod member of said vertical transfer machine and affixed to a lower surface of said second rotatable plug means whereby 180° rotation of said second rotatable plug means moves said internal structure between a position in which it is concentrical about said first vertical centerline to another position at which at least one core assembly located in said central portion of said core barrel is exposed for access by said offset arm transfer machine.

4. The reactor system of Claim 3 wherein said first vertical transfer machine is located on the upper surface of the second rotatable plug means at a position opposite to said second vertical centerline.

5. The reactor system of Claim 1 wherein said reactor is a pool-type breeder reactor.

6. The reactor system of Claim 1 wherein said second vertical centerline is offset an amount such that said vertical transfer machine is positionable over about one 30-40% of the core assemblies in said core barrel.

EA-5705

**Fig.1.**

Fig.2.

Fig.3.